(19) Europäisches Patentamt
European Patent Office
Office européen des brevets

(11) **EP 2 649 123 B1**

(12) **EUROPÄISCHE PATENTSCHRIFT**

(45) Veröffentlichungstag und Bekanntmachung des Hinweises auf die Patenterteilung:
**02.07.2014 Patentblatt 2014/27**

(21) Anmeldenummer: **11796957.6**

(22) Anmeldetag: **06.12.2011**

(51) Int Cl.:
***C08K 5/544*** *(2006.01)*     ***C08L 83/04*** *(2006.01)*

(86) Internationale Anmeldenummer:
**PCT/EP2011/071901**

(87) Internationale Veröffentlichungsnummer:
**WO 2012/076518 (14.06.2012 Gazette 2012/24)**

(54) **WÄSSRIGE, VERNETZBARE DISPERSIONEN AUF DER BASIS VON ORGANOSILICIUMVERBINDUNGEN**

AQUEOUS CROSSLINKABLE DISPERSIONS BASED ON ORGANOSILICON COMPOUNDS

DISPERSIONS AQUEUSES RÉTICULABLES À BASE DE COMPOSÉS ORGANOSILICIÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2010 DE 102010062839**

(43) Veröffentlichungstag der Anmeldung:
**16.10.2013 Patentblatt 2013/42**

(73) Patentinhaber: **Wacker Chemie AG**
**81737 München (DE)**

(72) Erfinder:
• **SIXT, Torsten**
**84561 Mehring (DE)**
• **LAMBRECHT, Jens**
**84508 Burgkirchen (DE)**

(74) Vertreter: **Budczinski, Angelika et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A1- 1 473 296     US-A- 4 427 811**
**US-A- 5 162 429**

**Beschreibung**

Die Erfindung betrifft wässrige Dispersionen auf der Basis von Organosiliciumverbindungen, die sich nach Entfernen von Wasser in Elastomere oder Harze überführen lassen, Verfahren zu deren Herstellung und deren Verwendung als Dicht-, Kleb- und Beschichtungsmassen.

Aus Umweltschutzgründen ist es geboten in chemischen Zubereitungen auf flüchtige organische Bestandteile zu verzichten. Deshalb finden immer mehr wässrige Systeme Verwendung.

Wässrige Dispersionen von Polymeren, insbesondere solche, die sich nach Entfernen von Wasser in Elastomere oder Harze überführen lassen, sind seit langem bekannt. Sie bestehen im Wesentlichen aus einem linearen Polymer, einem Emulgator und Wasser. Darüber hinaus ist es bekannt noch weitere Stoffe wie Vernetzer, Haftvermittler, Vernetzungskatalysatoren und nichtverstärkende Füllstoffe zuzusetzen. Als Polymere werden solche mit reaktiven Endgruppen eingesetzt. Es können sowohl die fertigen Polymere direkt mit Wasser und Emulgator zu einer Emulsion verarbeitet werden oder es werden zunächst Ausgangsstoffe für die Polymere emulgiert, woran sich ggf. eine Emulsionspolymerisation, -polykondensation, -polyaddition, strahlungs- oder thermisch-initiierte Vernetzung anschließen kann. Die Polymeremulsion kann dann mit einer Vernetzerkomponente und Katalysatoren jeweils in Substanz oder als Emulsion sowie weiteren Bestandteilen, wie Füllstoffen, Haftvermittlern, etc. vermischt werden.

Wässrige Dispersionen von Organopolysiloxanen werden bisher im Allgemeinen durch organische Emulgatoren stabilisiert. Es werden kationische, anionische, ampholytische sowie nichtionische Emulgatoren verwendet. Als beispielhafte Schriften seien hier EP 365 439 A und EP 665 882 A genannt.

In US 4,221,688 und US 4,427,811 sind Siliconpolymeremulsionen beschrieben, die beim Entfernen von Wasser zu Elastomeren aushärten und durch anionische Emulgatoren stabilisiert werden. Zusätzlich enthalten diese Emulsionen kolloidales Siliciumdioxid zur Verbesserung der mechanischen Eigenschaften. Darüber hinaus werden in US 5,162,429 Siliconpolymeremulsionen bestehend aus mit anionischem Emulgator stabilisierter Emulsion des Polymers und mit anionischem Emulgator stabilisierter Dispersion von pyrogener Kieselsäure in Wasser beschrieben. Die pyrogene Kieselsäure dient hierbei als verstärkender Füllstoff.

Für Anwendungsbereiche, bei denen oberflächenaktive Substanzen, wie z.B. Emulgatoren die typischen Siliconeigenschaften verändern, ist bisher noch keine geeignete Lösung bekannt, da derzeit wässrige Systeme grundsätzlich solche Emulgatoren enthalten. Diese Stoffe wirken sich auch auf Oberflächeneigenschaften wie beispielsweise die Benetzbarkeit aus.

Gegenstand der Erfindung sind wässrige, vernetzbare Dispersionen herstellbar unter Verwendung von

(A) Organosiliciumverbindungen enthaltend Einheiten der Formel

$$R_a(OR^1)_bSiO_{(4-a-b)/2} \qquad (I),$$

wobei

R gleiche oder verschiedene SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet,

$R^1$ gleich oder verschieden sein kann und Wasserstoffatom oder gegebenenfalls substituierter Kohlenwasserstoffrest, der mit Sauerstoffatomen unterbrochen sein kann, bedeutet,

a 0, 1, 2 oder 3, bevorzugt 1 oder 2, ist und

b 0, 1, 2 oder 3, bevorzugt 0, 1 oder 2, ist,

mit der Maßgabe, dass die Summe aus a+b kleiner oder gleich 4 ist,

(B) Siliciumdioxidpartikel, die zum Teil mit Wasser benetzbar sind,

(C) Wasser

(D) Organosiliciumverbindung enthaltend mindestens eine Einheit der Formel

$$[A-CR^3_2]_eSiR^2_cY_dO_{(4-c-d-e)/2} \qquad (II),$$

wobei

A gleich oder verschieden sein kann und einen über Stickstoff gebundenen organischen Rest bedeutet,

$R^2$ gleiche oder verschiedene, einwertige, gegebenenfalls substituierte Kohlenwasserstoffreste bedeutet,

$R^3$ gleich oder verschieden sein kann und Wasserstoffatom oder einwertige, gegebenenfalls substituierte Kohlenwasserstoffreste darstellt,

Y gleich oder verschieden sein kann und einen hydrolysierbaren Rest bedeutet,

c gleich 0, 1, 2 oder 3, bevorzugt 0, 1 oder 2, besonders bevorzugt 0 oder 1, ist,

d gleich 0, 1, 2 oder 3, bevorzugt 2 oder 3, und

e gleich 0, 1 oder 2, bevorzugt 0 oder 1, ist, mit der Maßgabe, dass die Summe aus c+d+e ≤ 4 ist und die Organosiliciumverbindung mindestens eine Einheit mit e verschieden 0 sowie mindestens zwei Reste Y, bevorzugt mindestens drei Reste Y, aufweist,

sowie gegebenenfalls

(E) weiteren Stoffen.

Bevorzugt sind die erfindungsgemäßen Dispersionen im Wesentlichen frei von herkömmlichen, bei Raumtemperatur und dem Druck der umgebenden Atmosphäre nicht-partikulären flüssigen und festen, rein organischen oberflächenaktiven Substanzen, wie nichtionischen, kationischen, anionischen und amphotere Emulgatoren ("organische Emulgatoren").

Nicht-partikuläre Emulgatoren heißt hier keine Partikel und Kolloide, sondern Moleküle und Polymere, folgend der Definition von Molekülen, Polymeren, Kolloide und Partikel wie gegeben in Dispersionen und Emulsionen, G. Lagaly, O. Schulz, R. Zindel, Steinkopff, Darmstadt 1997, ISBN 3-7985-1087-3, S. 1-4.

Im Allgemeinen weisen diese organischen Emulgatoren eine Größe kleiner 1 nm, eine Molmasse < 10 000 g/Mol, einen Kohlenstoffgehalt > 50 Gew.-%, bestimmbar durch Elementaranalyse, sowie eine Mohs'sche Härte kleiner als 1 auf.

Zugleich weisen die Emulgatoren, von denen die erfindungsgemäßen Dispersionen im Wesentlichen frei sind, zumeist eine Löslichkeit in Wasser bei 20°C und dem Druck der umgebenden Atmosphäre, also 900 bis 1100 hPa, homogen oder in Micellen-Form von größer 1 Gew.-% auf.

Die erfindungsgemäßen Dispersionen können solche organischen Emulgatoren bis zu einem maximalen Gewichtsanteil, bezogen auf das Gesamtgewicht der erfindungsgemäßen Dispersion, von kleiner 10 Gew.-%, bevorzugt kleiner 2 Gew.-%, besonders bevorzugt kleiner 1 Gew.-%, insbesondere 0 Gew.-%, enthalten.

Die erfindungsgemäß eingesetzte Komponente (A) ist bei Raumtemperatur und dem Druck der umgebenden Atmosphäre, also zwischen 900 und 1100 hPa, bevorzugt flüssig und hat eine Viskosität von bevorzugt 1 bis 10 000 000 mPas, besonders bevorzugt von 100 bis 500 000 mPas, insbesondere von 1000 bis 100000 mPas, jeweils bei 25°C.

Bei den erfindungsgemäß eingesetzten Organosiliciumverbindungen (A) kann es sich sowohl um Silane handeln, d.h. Verbindungen der Formel (I) mit a+b=4, als auch um Siloxane, d.h. Verbindungen enthaltend Einheiten der Formel (I) mit a+b≤3. Vorzugsweise handelt es sich bei den erfindungsgemäß eingesetzten Organosiliciumverbindungen enthaltend Einheiten der Formel (I) um oligomere oder polymere Organosiloxane, die linear, verzweigt oder cyclisch sein können, insbesondere um solche, die aus Einheiten der Formel (I) bestehen.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der $\alpha$- und der $\beta$-Phenylethylrest.

Beispiele für substituierte Kohlenwasserstoffreste R sind halogenierte Reste wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)-ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest; durch Aminogruppen substituierte Reste, wie der N-(2-aminoethyl)-3-aminopropylrest, der 3-Aminopropylrest, der 3-(Cyclohexylamino)propylrest, der Aminomethylrest, der Cyclohexylaminomethylrest, Alkyl- oder Arylaminomethylreste mit Alkyl- oder Arylresten mit 1-18 Kohlenstoffeinheiten und der Diethylaminomethylrest; etherfunktionelle Reste, wie der 3-Methoxypropylrest, der Methoxymethylrest, der 3-Ethoxypropylrest und der Acetoxymethylrest; cyanofunktionelle Reste, wie der 2-Cyanoethylrest; esterfunktionelle Reste, wie der Methacryloxypropylrest; epoxyfunktionelle Reste, wie der Glycidoxypropylrest und schwefelfunktionelle Reste, wie der 3-Mercaptopropylrest.

Bevorzugt als Reste R sind Kohlenwasserstoffreste mit 1 bis 10 Kohlenstoffatomen, wobei besonders bevorzugt mindestens 80 %, insbesondere mindestens 90 %, der Reste R Methylreste sind.

Beispiele für Reste R[1] sind die für Rest R angegebenen Beispiele.

Bevorzugte "Reste R[1] sind Wasserstoffatom und Alkylgruppen mit 1 bis 6 Kohlenstoffatomen, besonders bevorzugt Wasserstoffatom und Methyl- sowie Ethylreste, insbesondere Wasserstoffatom. Beispiele für Komponente (A) sind $\alpha,\omega$-Dihydroxypolydimethylsiloxane mit 30 bis 2000 Siloxyeinheiten, $\alpha,\omega$-Dialkoxypolydimethylsiloxane oder Polydimethylsiloxane mit Dialkoxysilyl- oder Trialkoxysilylendgruppen, verzweigte Organopolysiloxane mit Organyloxy- und/oder OH-Funktionen enthaltend T und/oder Q-Einheiten.

Bevorzugt werden als Komponente (A) im Wesentlichen lineare Siloxane mit einem molaren Anteil von Verzweigungen, d.h. T- und/oder Q-Einheiten, von kleiner 10%, eingesetzt.

Besonders bevorzugt handelt es sich bei erfindungsgemäß eingesetzten Organosiliciumverbindungen (A) um im Wesentlichen lineare, OH- und/oder alkoxyterminierte Organopolysiloxane, insbesondere um $\alpha,\omega$-Dihydroxydiorganopolysiloxane, ganz besonders bevorzugt um $\alpha,\omega$-Dihydroxydiorganopolysiloxane mit einer Viskosität von 1000 bis 100 000 mPas bei 25°C.

Bei der Komponente (A) handelt es sich um handelsübliche Stoffe bzw. können nach in der organischen bzw. siliciumorganischen Chemie gängigen Methoden hergestellt werden.

Bei der erfindungsgemäß eingesetzten Komponente (B) handelt es sich um zum Teil mit Wasser benetzbare Siliciumdioxidpartikel, d.h. die nicht vollständig mit Wasser benetzbar sind und nicht vollständig Wasser-unbenetzbar sind.

Bevorzugt weisen die erfindungsgemäß eingesetzten Partikel (B) einen mittleren Durchmesser größer 1 nm, vorzugsweise von 1 bis 5000 nm, besonders bevorzugt von 10 bis 1000 nm, insbesondere von 100 bis 600 nm, speziell ausgewählt von 150 nm bis 500 nm, auf, jeweils gemessen bevorzugt mittels dynamischer Lichtstreuung (gemäß ISO 13320:2009, beispielsweise mit Malvern Zetasizer Nano ZS).

Bevorzugt weisen die erfindungsgemäß eingesetzten Partikel (B) eine spezifische BET-Oberfläche von 30 bis 500 $m^2/g$, besonders bevorzugt 100 bis 300 $m^2/g$, auf. Die BET-Oberfläche wird nach bekannten Verfahren gemessen, bevorzugt gemäß Deutscher Industrie Norm DIN 66131 und DIN 66132.

Bevorzugt weisen die erfindungsgemäß eingesetzten Partikel (B) einen Kohlenstoffgehalt von kleiner 50 Gewichtsprozent auf, besonders bevorzugt 0,01 bis 20 Gewichtsprozent, insbesondere 0,02-5 Gewichtsprozent.

Vorzugsweise handelt es sich bei der erfindungsgemäß eingesetzten Komponente (B) um Partikel mit einem Kontaktwinkel THETA von 0 bis 180°, besonders bevorzugt 30 bis 150°, insbesondere 45 bis 135°, jeweils gemessen an der Phasengrenze Wasser-Luft bei einer Temperatur von 25°C und dem Druck der umgebenden Atmosphäre, also zwischen 900 und 1100 hPa. Der Kontaktwinkel Theta wird nach bekannten Verfahren gemessen, bevorzugt bestimmt an einem Pressling von Komponente (B) gegen Wasser, wobei die digitale Bildauswertung des Kontaktwinkels Substrat-Wasser mit bidestilliertem Wasser erfolgt (gemäß DIN EN 828, beispielsweise mit Dataphysics OCA 15 EC).

Vorzugsweise weisen die Partikel (B) eine Oberflächenenergie gamma von 30 bis 72,5 $mJ/m^2$ auf bei einer Temperatur von 25°C und dem Druck der umgebenden Atmosphäre, also zwischen 900 und 1100 hPa.

Vorzugsweise weisen die erfindungsgemäß eingesetzten Partikel (B) einen Dispersions-Anteil der Oberflächenenergie gamma-s-D von 40 bis 80 $mJ/m^2$, bevorzugt 50 bis 70 $mJ/m^2$, besonders bevorzugt 60 bis 70 $mJ/m^2$ auf, bei einer Temperatur von 25°C und dem Druck der umgebenden Atmosphäre, also zwischen 900 und 1100 hPa. Gemessen wird der Dispersions-Anteil der Oberflächenenergie gamma-s-D zum Beispiel gemäß "Inverse Gaschromatographie"- "Characterisation of Polymers and other Materials", 391 ACS Symposium Series, D R Lloyd, Th C Ward, H P Schreiber, Chapter 18, pp 248-261, ACS, Washington DC 1989, ISBN 0-8412-1610-X.

Bei dem erfindungsgemäß eingesetzten Siliciumdioxid (B) kann es sich um nasschemisch hergestelltes Siliciumdioxid handeln, beispielsweise gefällte Kieselsäuren oder Kieselgele, oder um in Prozessen bei erhöhter Temperatur hergestelltes Siliciumdioxid, z.B pyrogen hergestellte Siliciumdioxide oder Kieselsäuren, wobei Komponente (B) bevorzugt pyrogen hergestelltes Siliciumdioxid ist.

Die bevorzugte Ausgangs-Kieselsäure, aus der die in den erfindungsgemäßen Dispersionen eingesetzte, zum Teil mit Wasser benetzbare Kieselsäure hergestellt wird, kann auf beliebige an sich bekannte Weise, wie beispielsweise in einer Flammenreaktion aus Halogen-siliciumverbindungen hergestellt werden, z.B. aus Siliciumtetrachlorid oder Halogen-Organosiliciumverbindungen wie Methylchlorsilanen, wie Methyltrichlorsilan, oder Hydrogenchlorsilanen wie Hydrogentrichlorsilan oder anderen Hydrogenmethylchlorsilanen, wie Hydrogenmethyldichlorsilan oder Alkylchlorsilanen, auch im Gemisch mit Kohlenwasserstoffen, oder beliebigen versprühbaren und, bevorzugt, verflüchtigbaren Gemischen aus Organosiliciumverbindungen, wie genannt, und Kohlenwasserstoffen, wobei es sich bei der Flamme um eine Wasserstoff-Sauerstoff-Flamme oder auch eine Kohlenmonoxid-Sauerstoff-Flamme handeln kann. Die Herstellung der Kieselsäure kann dabei wahlweise mit und ohne zusätzlichem Zusatz von Wasser erfolgen, zum Beispiel im Schritt der Reinigung; bevorzugt ist kein Zusatz von Wasser.

Bevorzugt werden zur Herstellung der erfindungsgemäßen Dispersionen als Komponente (B) teilhydrophobierte, besonders bevorzugt teilsilylierte, Feststoffpartikel eingesetzt, insbesondere solche, die an ihrer Oberfläche OH-Gruppen tragen.

Teilweise silyliert bedeutet hier, dass weder die gesamte Partikel-Oberfläche unsilyliert ist, noch dass die gesamte Partikel-Oberfläche silyliert ist.

Der Bedeckungsgrad $\tau$ der Oberfläche der Feststoffpartikel mit Silyliermittelresten ist dabei, bezogen auf die Gesamt-Partikel-Oberfläche, bevorzugt 5 bis 95 %, besonders bevorzugt 5 bis 50 %, insbesondere 10 bis 30 %.

Die Bedeckung mit Silyliermittel kann dabei beispielsweise mittels Elementaranalyse, wie z.B. über den Kohlenstoffgehalt, ermittelt werden oder durch Bestimmung des Rest-Gehaltes an reaktiven Oberflächen-OH-Gruppen des Partikels.

Für pyrogenes Siliciumdioxid bedeutet Teilsilylierung hier, dass der Gehalt an nicht-silylierten Oberflächensilanolgruppen an der Siliciumdioxidoberfläche sich zwischen bevorzugt maximal 95 % und minimal 5 %, besonders bevorzugt von 95 bis 50 %, insbesondere 90 bis 70 %, des Ausgangs-Siliciumdioxids bewegt.

Dies bedeutet, dass die Dichte der Oberflächensilanolgruppen SiOH sich vorzugsweise zwischen minimal 0,1 und maximal 1,7, bevorzugt von 0,9 bis 1,7, besonders bevorzugt von 1,25 bis 1,6, SiOH pro $nm^2$ Partikeloberfläche bewegt.

Für ein Ausgangs-Siliciumdioxid von 200 $m^2$/g spezifischer Oberfläche, das zur Silylierung herangezogen werden kann, bedeutet dies vorzugsweise zwischen minimal 0,03 mMol/g SiOH und maximal 0,57 mMol/g SiOH, bevorzugt 0,3 bis 0,57 mMol/g SiOH, besonders bevorzugt 0,42 bis 0,54 mMol/g SiOH; für ein Siliciumdioxid mit geringerer bzw. größerer Oberfläche bedeutet dies linear proportional mehr oder weniger Oberflächensilanolgruppen SiOH.

Verfahren zur Teilhydrophobierung bzw. Teilsilylierung von Feststoffpartikel sind bereits bekannt wie z.B. beschrieben in EP-B 1 433 749.

Vorzugsweise weist die Ausgangs-Kieselsäure eine spezifische BET-Oberfläche von 25 bis 500 $m^2$/g auf. Die Ausgangs-Kieselsäure weist vorzugsweise Aggregate (Definition nach DIN 53206) im Bereich von Durchmessern 100 bis 1000 nm auf, wobei die Kieselsäure aus Aggregaten aufgebaute Agglomerate (Definition nach DIN 53206) aufweist, die in Abhängigkeit von der äußeren Scherbelastung (z.B. Messbedingungen) Größen von 1 bis 500 $\mu$m aufweisen.

Vorzugsweise weist die Ausgangs-Kieselsäure eine fraktale Dimension der Oberfläche von vorzugsweise kleiner oder gleich 2,3 auf, wobei die fraktale Dimension der Oberfläche $D_s$ hierbei definiert ist als: Partikel-Oberfläche A ist proportional zum Partikel-Radius R hoch $D_s$. Vorzugsweise weist die Ausgangs-Kieselsäure eine Dichte an zugänglichen, d.h. einer chemischen Reaktion zugänglichen, Oberflächen-Silanolgruppen SiOH von bevorzugt 1,5 bis 2,5 SiOH pro $nm^2$ spezifischer Oberfläche, besonders bevorzugt 1,6 bis 2,0 SiOH pro $nm^2$, auf.

Zur Herstellung der erfindungsgemäß eingesetzten Komponente (B) können als Ausgangs-Kieselsäuren bei hoher Temperatur (größer 1000°C) hergestellte Kieselsäuren eingesetzt werden, wobei pyrogen hergestellte Kieselsäuren besonders bevorzugt sind. Es können hydrophile Kieselsäuren eingesetzt werden, die frisch hergestellt direkt aus dem Brenner kommen, zwischengelagert oder bereits handelsüblich verpackt sind.

Als Ausgangs-Kieselsäuren können unverdichtete, mit Stampf- oder Klopfdichten kleiner 60 g/l, aber auch verdichtete, mit Stampf- oder Klopfdichten größer 60 g/l, Kieselsäuren eingesetzt werden.

Als Ausgangs-Kieselsäuren können Gemische aus verschiedenen Kieselsäuren eingesetzt werden, so z.B. Mischungen aus Kieselsäuren unterschiedlicher BET-Oberfläche.

Zur Silylierung der Siliciumdioxid-Partikel können alle bisher bekannten Organosiliciumverbindungen eingesetzt sowie Verfahren angewendet werden, wie z.B. in EP-B 1 433 749 auf Seite 3, Zeile 29 bis Seite 6, Zeile 6 beschrieben.

Bevorzugt weisen die erfindungsgemäß als Komponente (B) eingesetzten Kieselsäuren eine BET-Oberfläche von 170 bis 250 $m^2$/g und einen Kohlenstoffgehalt von 0,1 bis 3 Gewichtsprozent, vorzugsweise von 0,1 bis 1,5 Gewichtsprozent, insbesondere von 0,1 bis 1 Gewichtsprozent, ganz besonders bevorzugt von 0,1 bis 0,7 Gewichtsprozent, auf, jeweils bestimmbar bevorzugt durch Elementaranalyse.

Die erfindungsgemäßen Dispersionen enthalten Komponente (B) in Mengen von bevorzugt 0,1 bis 50 Gewichtsteilen, besonders bevorzugt 1 bis 25 Gewichtsteilen, insbesondere 2 bis 12 Gewichtsteilen, bezogen auf 100 Gewichtsteile Dispersion.

Beispiele für Komponente (C) sind natürliche Wässer, wie z.B. Regenwasser, Grundwasser, Quellwasser, Flusswasser und Meerwasser, chemische Wässer, wie z.B. vollentsalztes Wasser, destilliertes oder (mehrfach) redestilliertes Wasser, Wässer für medizinische oder pharmazeutische Zwecke, wie z.B. gereinigtes Wasser (Aqua purificata; Pharm. Eur. 3), Aqua deionisata, Aqua destillata, Aqua bidestillata, Aqua ad injectionam oder Aqua conservata, Trinkwasser nach deutscher Trinkwasserverordnung und Mineralwässer.

Vorzugsweise werden als Komponente (C) chemische Wässer, besonders bevorzugt vollentsalztes Wasser und destilliertes Wasser, eingesetzt.

Die erfindungsgemäßen Dispersionen enthalten Wasser (C) in Mengen von bevorzugt 10 bis 90 Gewichtsteilen, besonders bevorzugt 20 bis 80 Gewichtsteilen, insbesondere 30 bis 60 Gewichtsteilen, bezogen auf 100 Gewichtsteile Dispersion.

Bei den erfindungsgemäß eingesetzten Organosiliciumverbindungen (D) kann es sich sowohl um Silane handeln, d.h. Verbindungen der Formel (II) mit c+d+e=4, als auch um Siloxane, d.h. Verbindungen enthaltend Einheiten der Formel (II) mit c+d+e≤3.

Vorzugsweise handelt es sich bei den erfindungsgemäß eingesetzten Organosiliciumverbindungen (D) um Silane und Siloxane, die aus Einheiten der Formel (II) bestehen, besonders bevorzugt um Silane der Formel (II) und/oder deren Teilhydrolysate, wobei die Teihydrolysate bevorzugt höchstens 10 Siliciumatome aufweisen.

Beispiele für Reste $R^2$ sind die für R angegebenen Reste.

Bevorzugt handelt es sich bei Rest $R^2$ um Alkylreste mit 1 bis 6 Kohlenstoffatomen, besonders bevorzugt um den Methyl- oder den Ethylrest.

Beispiele für Reste $R^3$ sind Wasserstoffatom sowie die für R angegebenen Reste.

Bevorzugt handelt es sich bei Rest $R^3$ um Wasserstoffatom und Kohlenwasserstoffreste mit 1 bis 20 Kohlenstoffatomen, insbesondere um Wasserstoffatom.

Bevorzugt handelt es sich bei A um Reste der Formel $R^4R^5N-$, wobei $R^4$ und $R^5$ jeweils unabhängig voneinander Wasserstoffatom oder einwertige, gegebenenfalls substituierte Kohlenwasserstoffreste bedeuten, wobei die Gruppierung $R^4R^5N-$ auch zu einem Ring verbunden sein kann.

Beispiele für Reste $R^4$ und $R^5$ sind jeweils unabhängig voneinander Wasserstoffatom und die für R oben angegebenen Beispiele.

Bevorzugt handelt es sich bei Rest $R^4$ um Kohlenwasserstoffe mit 1 bis 8 Kohlenstoffatomen.

Bevorzugt handelt es sich bei Rest $R^5$ um Wasserstoffatom oder um Kohlenwasserstoffe mit 1 bis 8 Kohlenstoffatomen.

Beispiele für Reste A sind Dimethylamino-, Diethylamino-, Dipropylamino-, Dibutylamino-, Dipentylamino, Dihexylamino-, n-Hexylamino-, Octylamino-, N-Cyclohexylamino-, N-Phenylamino-, der N-Morpholino-, der N-Pyrrolidino- und der N-Piperidino-Rest.

Beispiele für Reste Y sind alle bisher bekannten hydrolysierbaren Reste, wie z.B. Halogenatome, Organyloxyreste, Si-N-gebundene Aminreste, Amidreste, Oximreste, Acyloxyreste und Aminoxyreste.

Bevorzugt handelt es sich bei Rest Y um Organyloxyreste, wie Methoxy-, Ethoxy-, n-Propoxy-, i-Propoxy-, n-Butoxy-, i-Butoxy-, s-Butoxy-, tert-Butoxy- und 2-Methoxyethoxyrest.

Beispiele für die erfindungsgemäß eingesetzte Organosiliciumverbindung (D) sind $H_2N-CH_2-Si(OCH_3)_3$, $H_2N-CH_2-Si(OCH_2CH_3)_3$, $(CH_3-(CH_2)_3)_2N-CH_2-Si-(OCH_2CH_3)_3$, $(H_3C)_2N-CH_2-Si(OCH_2CH_3)_3$, $(H_3C)_2N-CH_2-Si(OCH_3)_3$, $(H_3C-CH_2)_2N-CH_2-Si(OCH_2CH_3)_3$, $(CH_3-(CH_2)_3)_2N-CH_2-Si(OCH_3)_3$, $(H_3C-CH_2)_2N-CH_2-Si(OCH_3)_3$, $(CH_3-(CH_2)_2)_2N-CH_2-Si(OCH_2CH_3)_3$, $(CH_3-(CH_2)_2)_2N-CH_2-Si(OCH_3)_3$, $((CH_3)_2CH)_2N-CH_2-Si(OCH_2CH_3)_3$, $((CH_3)_2CH)_2N-CH_2-Si(OCH_3)_3$, $(CH_3CH_2(CH_3)CH)_2N-CH_2-Si(OCH_2CH_3)_3$, $(CH_3CH_2(CH_3)CH)_2N-CH_2-Si(OCH_2CH_3)_3$, $((CH_3)_3C)_2N-CH_2-Si(OCH_2CH_3)_3$, $((CH_3)_3C)_2N-CH_2-Si(OCH_3)_3$, $(CH_3-(CH_2)_4)_2N-CH_2-Si(OCH_3)_3$, $(CH_3-(CH_2)_4)_2N-CH_2-Si(OCH_2CH_3)_3$, $(CH_3CH_2(CH_3)_2C)N-CH_2-Si(OCH_2CH_3)_3$, $(CH_3CH_2(CH_3)_2C)N-CH_2-Si(OCH_2CH_3)_3$, $(CH_3-(CH_2)_5)_2N-CH_2-Si(OCH_2CH_3)_3$, $(CH_3-(CH_2)_5)_2N-CH_2-Si(OCH_3)_3$, $(CH_3-(CH_2)_3(CH_3)CH)_2N-CH_2-Si(OCH_3)_3$, $(CH_3-(CH_2)_3(CH_3)CH)_2N-CH_2-Si(OCH_2CH_3)_3$, $C_6H_5(CH_3)N-CH_2-Si(OCH_2CH_3)_3$, $C_6H_5(CH_3)N-CH_2-Si(OCH_3)_3$, $C_6H_{11}(CH_3)N-CH_2-Si(OCH_2CH_3)_3$, $C_6H_{11}(CH_3)N-CH_2-Si(OCH_3)_3$, $(C_6H_{11})_2N-CH_2-Si(OCH_2CH_3)_3$, $(C_6H_{11})_2N-CH_2-Si(OCH_3)_3$, $(CH_3-(CH_2)_3)HN-CH_2-Si(OCH_2CH_3)_3$, $(H_3C)HN-CH_2-Si(OCH_2CH_3)_3$, $(H_3C)HN-CH_2-Si(OCH_3)_3$, $(H_3C-CH_2)-HN-CH_2-Si(OCH_2CH_3)_3$, $(CH_3-(CH_2)_2)HN-CH_2-Si(OCH_2CH_3)_3$, $(CH_3-(CH_2)_2)HN-CH_2-Si(OCH_2CH_3)_3$, $(CH_3-(CH_2)_3)HN-CH_2-Si(OCH_2CH_3)_3$, $(H_3C-CH_2)HN-CH_2-Si(OCH_3)_3$, $((CH_3)_2CH)HN-CH_2-Si(OCH_2CH_3)_3$, $((CH_3)_2CH)HN-CH_2-Si(OCH_3)_3$, $((CH_3)_3C)HN-CH_2-Si(OCH_2CH_3)_3$, $((CH_3)_3C)HN-CH_2-Si(OCH_3)_3$, $(CH_3CH_2(CH_3)CH)HN-CH_2-Si(OCH_2CH_3)_3$, $(CH_3CH_2(CH_3)CH)HN-CH_2-Si(OCH_3)_3$, $(CH_3-(CH_2)_4)HN-CH_2-Si(OCH_3)_3$, $(CH_3-(CH_2)_4)HN-CH_2-Si(OCH_2CH_3)_3$, $(CH_3CH_2(CH_3)_2C)HN-CH_2-Si(OCH_2CH_3)_3$, $(CH_3CH_2(CH_3)_2C)HN-CH_2-Si(OCH_3)_3$, $(CH_3-(CH_2)_5)HN-CH_2-Si(OCH_2CH_3)_3$, $(CH_3-(CH_2)_5)HN-CH_2-Si(OCH_3)_3$, $(CH_3-(CH_2)_3(CH_3)CH)HN-CH_2-Si(OCH_3)_3$, $(CH_3-(CH_2)_3(CH_3)CH)HN-CH_2-Si(OCH_2CH_3)_3$, $C_6H_5HN-CH_2-Si(OCH_2CH_3)_3$, $C_6H_5HN-CH_2-Si(OCH_3)_3$, $C_6H_{11}HN-CH_2-Si(OCH_2CH_3)_3$, $C_6H_{11}HN-CH_2-Si(OCH_3)_3$, $cyclo(O(CH_2-CH_2)_2N)-CH_2-Si(OCH_2CH_3)_3$, $cyclo(O(CH_2-CH_2)_2N)-CH_2-Si(OCH_3)_3$, $cyclo(HN(CH_2-CH_2)_2N)-CH_2-Si(OCH_2CH_3)_3$, $cyclo(HN(CH_2-CH_2)_2N)-CH_2-Si(OCH_3)_3$, $H_2N-CH_2-SiCH_3(OCH_3)_2$, $H_2N-CH_2-SiCH_3(OCH_2CH_3)_2$, $(H_3C)_2N-CH_2-SiCH_3(OCH_2CH_3)_2$, $(H_3C)_2N-CH_2-SiCH_3(OCH_3)_2$, $(CH_3-(CH_2)_3)_2N-CH_2-SiCH_3(OCH_2CH_3)_2$, $(H_3C-CH_2)_2N-CH_2-SiCH_3(OCH_2CH_3)_2$, $(CH_3-(CH_2)_3)_2N-CH_2-SiCH_3(OCH_3)_2$, $(H_3C-CH_2)_2N-CH_2-SiCH_3(OCH_3)_2$, $(CH_3-(CH_2)_2)_2N-CH_2-SiCH_3(OCH_3)_2$, $(CH_3-(CH_2)_2)_2N-CH_2-SiCH_3(OCH_2CH_3)_2$, $((CH_3)_2CH)_2N-CH_2-SiCH_3(OCH_2CH_3)_2$, $((CH_3)_2CH)_2N-CH_2-SiCH_3(OCH_3)_2$, $((CH_3)_3C)_2N-CH_2-SiCH_3(OCH_2CH_3)_2$, $((CH_3)_3C)_2N-CH_2-SiCH_3(OCH_3)_2$, $(CH_3CH_2(CH_3)CH)_2N-CH_2-SiCH_3(OCH_2CH_3)_2$, $(CH_3-(CH_2)_4)_2N-CH_2-SiCH_3(OCH_3)_2$, $(CH_3-(CH_2)_4)_2N-CH_2-SiCH_3(OCH_2CH_3)_2$, $(CH_3-(CH_2)_3(CH_3)CH)_2N-CH_2-SiCH_3(OCH_2CH_3)_2$, $(CH_3CH_2(CH_3)CH)_2N-CH_2-SiCH_3(OCH_3)_2$, $(CH_3CH_2(CH_3)_2C)_2N-CH_2-SiCH_3(OCH_2CH_3)_2$, $(CH_3CH_2(CH_3)_2C)_2N-CH_2-SiCH_3(OCH_3)_2$, $(CH_3-(CH_2)_5)_2N-CH_2-SiCH_3(OCH_2CH_3)_2$, $(CH_3-(CH_2)_5)_2N-CH_2-SiCH_3(OCH_3)_2$, $C_6H_5(CH_3)N-CH_2-SiCH_3(OCH_2CH_3)_2$, $C_6H_5(CH_3)N-CH_2-SiCH_3(OCH_3)_2$, $C_6H_{11}(CH_3)N-CH_2-SiCH_3(OCH_2CH_3)_2$, $C_6H_{11}(CH_3)N-CH_2-SiCH_3(OCH_3)_2$, $(CH_3-(CH_2)_3)HN-CH_2-SiCH_3(OCH_2CH_3)_2$, $(H_3C-CH_2)HN-CH_2-SiCH_3(OCH_2CH_3)_2$, $(H_3C)HN-CH_2-SiCH_3(OCH_2CH_3)_2$, $(H_3C)HN-CH_2-SiCH_3(OCH_3)_2$, $(CH_3-(CH_2)_3)HN-CH_2-SiCH_3(OCH_3)_2$, $(H_3C-CH_2)HN-CH_2-SiCH_3(OCH_3)_2$, $(CH_3-(CH_2)_2)HN-CH_2-SiCH_3(OCH_2CH_3)_2$, $(CH_3-(CH_2)_2)HN-CH_2-SiCH_3(OCH_3)_2$, $((CH_3)_2CH)HN-CH_2-SiCH_3(OCH_2CH_3)_2$, $((CH_3)_2CH)HN-CH_2-SiCH_3(OCH_3)_2$, $((CH_3)_3C)HN-CH_2-SiCH_3(OCH_2CH_3)_2$, $((CH_3)_3C)HN-CH_2-SiCH_3(OCH_3)_2$, $(CH_3CH_2(CH_3)CH)HN-CH_2-SiCH_3(OCH_2CH_3)_2$, $(CH_3CH_2(CH_3)CH)HN-CH_2-SiCH_3(OCH_3)_2$, $(CH_3-(CH_2)_4)HN-CH_2-SiCH_3(OCH_3)_2$, $(CH_3-(CH_2)_4)HN-CH_2-SiCH_3(OCH_2CH_3)_2$, $(CH_3CH_2(CH_3)_2C)HN-CH_2-SiCH_3(OCH_2CH_3)_2$, $(CH_3CH_2(CH_3)_2C)HN-CH_2-SiCH_3(OCH_3)_2$, $(CH_3-(CH_2)_5)HN-CH_2-SiCH_3(OCH_2CH_3)_2$, $(CH_3-(CH_2)_5)HN-CH_2-SiCH_3(OCH_3)_2$, $(CH_3-(CH_2)_3(CH_3)CH)HN-CH_2-SiCH_3(OCH_3)_2$, $(CH_3-(CH_2)_3(CH_3)CH)HN-CH_2-SiCH_3(OCH_2CH_3)_2$, $C_6H_5HN-CH_2-SiCH_3(OCH_2CH_3)_2$, $C_6H_5HN-CH_2-SiCH_3(OCH_3)_2$, $(C_6H_{11})HN-CH_2-SiCH_3(OCH_2CH_3)_2$, $(C_6H_{11})HN-CH_2-SiCH_3(OCH_3)_2$ sowie deren Teilhydrolysate.

Bevorzugt handelt es sich bei den erfindungsgemäß eingesetzten Organosiliciumverbindung (D) um $(H_3C)_2N-CH_2-Si(OCH_3)_3$, $(H_3C)_2N-CH_2-Si(OCH_2CH_3)_3$, $(H_3C-CH_2)_2N-CH_2-Si(OCH_3)_3$, $(H_3C-CH_2)_2N-CH_2-Si(OCH_2CH_3)_3$, $((CH_3)_2CH)_2N-CH_2-Si(OCH_2CH_3)_3$, $((CH_3)_2CH)_2N-CH_2-Si(C)CH_3)_3$, $(CH_3-(CH_2)_2)_2N-CH_2-Si(OCH_2CH_3)_3$,

$(CH_3-(CH_2)_2)_2N-CH_2-Si(OCH_3)_3$, $(CH_3-(CH_2)_3)_2N-CH_2-Si(OCH_2CH_3)_3$, $(CH_3-(CH_2)_3)_2N-CH_2-Si(OCH_3)_3$, $(CH_3CH_2(CH_3)CH)_2N-CH_2-Si(OCH_2CH_3)_3$, $(CH_3CH_2(CH_3)CH)_2N-CH_2-Si(OCH_3)_3$, $((CH_3)_3C)_2N-CH_2-Si(OCH_2CH_3)_3$, $((CH_3)_3C)_2N-CH_2-Si(OCH_3)_3$, $(CH_3-(CH_2)_4)_2N-CH_2-Si(OCH_3)_3$, $(CH_3-(CH_2)_4)_2N-CH_2-Si(OCH_2CH_3)_3$, $(CH_3CH_2(CH_3)_2C)_2N-CH_2-Si(OCH_2CH_3)_3$, $(CH_3CH_2(CH_3)_2C)_2N-CH_2-Si(OCH_3)_3$, $(CH_3-(CH_2)_3(CH_3)CH)_2N-CH_2-Si(OCH_3)_3$, $(CH_3-(CH_2)_3(CH_3)CH)_2N-CH_2-Si(OCH_2CH_3)_3$, $(CH_3-(CH_2)_5)_2N-CH_2-Si(OCH_3)_3$, $(CH_3-(CH_2)_5)_2N-CH_2-Si(OCH_2CH_3)_3$, $(C_6H_{11})_2N-CH_2-Si(OCH_2CH_3)_3$, $(C_6H_{11})_2N-CH_2-Si(OCH_3)_3$, $(C_6H_{11})HN-CH_2-Si(OCH_2CH_3)_3$, $(C_6H_{11})HN-CH_2-Si(OCH_3)_3$, $cyclo(O(CH_2-CH_2)_2N)-CH_2-Si(OCH_2CH_3)_3$, $cyclo(O(CH_2-CH_2)_2N)CH_2-Si(OCH_3)_3$, $cyclo(HN(CH_2-CH_2)_2N)-CH_2-Si(OCH_2CH_3)_3$ und $cyclo(HN(CH_2-CH_2)_2N)-CH_2-Si(OCH_3)_3$ sowie deren Teilhydrolysate, wobei $(H_3C)_2N-CH_2-Si(OCH_3)_3$, $(H_3C)_2N-CH_2-Si(OCH_2CH_3)_3$, $(H_3C-CH_2)_2N-CH_2-Si(OCH_2CH_3)_3$, $(H_3C-CH_2)_2N-CH_2-Si(OCH_3)_3$, $(CH_3-(CH_2)_2)_2N-CH_2-Si(OCH_2CH_3)_3$, $(CH_3-(CH_2)_2)_2N-CH_2-Si(OCH_3)_3$, $((CH_3)_2CH)_2N-CH_2-Si(OCH_2CH_3)_3$, $((CH_3)_2CH)_2N-CH_2-Si(OCH_3)_3$, $(CH_3-(CH_2)_3)_2N-CH_2-Si(OCH_2CH_3)_3$, $(CH_3-(CH_2)_3)_2N-CH_2-Si(OCH_3)_3$, $(CH_3CH_2(CH_3)CH)_2N-CH_2-Si(OCH_2CH_3)_3$, $(CH_3CH_2(CH_3)CH)_2N-CH_2-Si(OCH_3)_3$, $((CH_3)_3C)_2N-CH_2-Si(OCH_2CH_3)_3$, $((CH_3)_3C)_2N-CH_2-Si(OCH_3)_3$, $(CH_3-(CH_2)_4)_2N-CH_2-Si(OCH_3)_3$, $(CH_3-(CH_2)_4)_2N-CH_2-Si(OCH_2CH_3)_3$, $(CH_3CH_2(CH_3)_2C)_2N-CH_2-Si(OCH_2CH_3)_3$, $(CH_3CH_2(CH_3)_2C)_2N-CH_2-Si(OCH_3)_3$, $(CH_3-(CH_2)_5)_2N-CH_2-Si(OCH_3)_3$, $(CH_3-(CH_2)_5)_2N-CH_2-Si(OCH_2CH_3)_3$, $(C_6H_{11})_2N-CH_2-Si(OCH_2CH_3)_3$ und $(C_6H_{11})_2N-CH_2-Si(OCH_3)_3$ sowie deren Teilhydrolysate besonders bevorzugt sind.

Bei den Organosiliciumverbindungen (D) handelt es sich um handelsübliche Produkte bzw. Produkte, die nach in der Siliciumchemie gängigen Methoden hergestellt werden können.

Zur Herstellung der erfindungsgemäßen wässrigen, vernetzbaren Dispersionen wird Komponente (D) in Mengen von bevorzugt 0,01 bis 10 Gewichtsteilen, besonders bevorzugt 0,05 bis 5 Gewichtsteilen, insbesondere 0,1 bis 3 Gewichtsteilen, bezogen auf 100 Gewichtsteile Dispersion eingesetat.

Bei den gegebenenfalls eingesetzten weiteren Stoffen (E) handelt es sich um beliebige Stoffe, die auch bisher in wässrigen, vernetzbaren Dispersionen eingesetzt werden, wie z.B. Füllstofffe, die unterschiedlich sind zu (B), Vernetzungskatalysatoren, Haftvermittler, Weichmacher, organische, in Bezug auf die Dispersionen inerte Lösungsmittel, Substanzen zur Einstellung des pH-Werts und Additive.

Beispiele für erfindungsgemäß gegebenenfalls eingesetzte Füllstoffe (E) sind nichtverstärkende Füllstoffe, wie zum Beispiel Füllstoffe mit einer BET-Oberfläche von bis zu 50 m$^2$/g, wie Quarz, Diatomeenerde, Calciumsilikat, Zirkoniumsilikat, Zeolithe, Aluminiumoxid, Titanoxid, Eisenoxid, Zinkoxid, Magnesiumhydroxid, Aluminiumhydroxid, Bariumsulfat, Calciumcarbonat, Gips, Siliciumnitrid, Siliciumcarbid, Bornitrid, Glas- und Kunststoffpulver, sowie verstärkende Füllstoffe, also Füllstoffe mit einer BET-Oberfläche von mehr als 50 m$^2$/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche, sowie faserförmige Füllstoffe, wie Asbest sowie Kunststofffasern.

Die genannten Füllstoffe (E) können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (E) um pyrogene Kieselsäuren, Ruße, Aluminiumhydroxide, Magnesiumhydroxide, gecoatete oder ungecoatete Calciumcarbonate oder silikatische Füllstoffe.

Falls Füllstoffe (E) eingesetzt werden, handelt es sich um Mengen von vorzugsweise 0,1 bis 200 Gewichtsteilen, besonders bevorzugt 0,5 bis 100 Gewichtsteilen, jeweils bezogen auf 100 Gewichtsteile Organosiliciumverbindung (A). Die eingesetzte Menge an Füllstoff (E) kann in weiten Bereichen variiert werden und richtet sich insbesondere nach dem jeweiligen Anwendungszweck der erfindungsgemäßen Dispersionen. Zur Herstellung der erfindungsgemäßen Dispersionen werden bevorzugt Füllstoff (E) eingesetzt.

Als Vernetzungskatalysatoren (E) können alle bekannten die Bildung von Siloxanbindungen beschleunigenden Verbindungen verwendet werden. Beispiele für derartige Katalysatoren (E) sind organische Zinnverbindungen wie Dibutylzinndilaurat, Dibutylzinndiacetat, Dibutylzinnoxid, Diocytylzinndilaurat, Dioctylzinndiacetat, Dioctylzinnoxid, sowie deren Umsetzungsprodukte mit Alkoxysilanen wie zum Beispiel Tetraethoxysilan. Weitere Beispiele für Katalysatoren (E) sind Titanverbindungen wie Tetraisopropyltitanat, Tetrabutyltitanat und Titanchelate sowie die entsprechenden Zirkonium-oder Hafniumverbindungen und Metallcarboxylate, wobei Dibutyl- und Dioctylorganozinncarboxylate sowie Carboxylate von Bismut, Lithium, Strontium und Zink bevorzugt und Dibutyl- und Dioctylorganozinncarboxylate besonders bevorzugt sind.

Falls Vernetzungskatalysatoren (E) eingesetzt werden, handelt es sich um Mengen von vorzugsweise 0,01 bis 10 Gewichtsteilen, besonders bevorzugt 0,02 bis 5 Gewichtsteilen, jeweils bezogen auf 100 Gewichtsteile Organosiliciumverbindung (A). Zur Herstellung der erfindungsgemäßen Dispersionen werden bevorzugt keine Vernetzungskatalysatoren (E) eingesetzt.

Als Haftvermittler (E) können alle Verbindungen eingesetzt werden, die auch bisher in vernetzbaren Siloxanmassen verwendet wurden, wobei diese vorzugsweise unterschiedlich sind zu den Komponenten (A) und (D). Beispiele für Haftvermittler (E), die zur Verbesserung der Haftung der aus den erfindungsgemäßen wässrigen Dispersionen nach Entfernen ihrer Lösungsmittelanteile erhaltenen elastomeren Produkte auf dem Untergrund, auf dem die erfindungsgemäßen Dispersionen aufgebracht worden sind, zugesetzt werden, sind aminofunktionelle Silane, wie beispielsweise Aminopropyltrialkoxysilane, N-(2-Aminoethyl)-3-aminopro-pyltrialkoxysilane, acryl- oder methacrylfunktionelle Alkoxysilane, wie Acryloxypropyl- oder Methacryloxypropyltrialkoxysilane, sowie epoxyfunktionelle Alkoxysilane, wie Glycidoxypropyltrialkoxysilane, bei denen der Alkoxyrest ein Methoxy-, Ethoxy-, n-Propoxy- oder Isopropoxyrest ist, sowie deren Hydrolyseprodukte.

Bevorzugt handelt es sich bei dem gegebenenfalls eingesetzten Haftvermittler (E) um Aminopropyltrialkoxysilan, N-(2-Amino-ethyl)-3-aminopropyltrialkoxysilan, Acryloxypropyl- oder Methacryloxypropyltrialkoxysilan, Glycidoxypropyltrialkoxysilane, bei denen der Alkoxyrest vorzugsweise ein Methoxy- oder Ethoxyrest ist, sowie deren Hydrolyseprodukte.

Falls Haftvermittler (E) eingesetzt wird, handelt es sich um Mengen von vorzugsweise 0,01 bis 20 Gewichtsteilen, besonders bevorzugt 0,1 bis 5 Gewichtsteilen, jeweils bezogen auf 100 Gewichtsteile Organosiliciumverbindung (A). Zur Herstellung der erfindungsgemäßen Dispersionen wird bevorzugt Haftvermittler (E) eingesetzt.

Als Weichmacher (E) können alle Verbindungen eingesetzt werden, die auch bisher in vernetzbaren Siloxanmassen verwendet wurden, wobei diese vorzugsweise unterschiedlich sind zu den Komponenten (A) und (D). Beispiele für gegebenenfalls eingesetzte Weichmacher (E) sind bei Raumtemperatur flüssige, durch Trimethylsiloxygruppen endblockierte Dimethylpolysiloxane mit einer Viskosität von mindestens 10 mPas bei 25°C, wobei Trimethylsilyl-gestopptes Polydimethylsiloxan oder teilphenyliertes, trimethylsilyl-gestopptes Polydimethylsiloxan mit einer Viskosität im Bereich von 20 bis 5000 mPas bei 25°C bevorzugt ist.

Falls Weichmacher (E) eingesetzt werden, handelt es sich um Mengen von vorzugsweise 1 bis 50 Gewichtsteilen, besonders bevorzugt 1 bis 20 Gewichtsteilen, jeweils bezogen auf 100 Gewichtsteile Organosiliciumverbindung (A).

Beispiele für organische, in Bezug auf die Dispersionen inerte Lösungsmittel (E), die gegebenenfalls eingesetzt werden können, sind Kohlenwasserstoffe, wie Petrolether verschiedener Siedebereiche, n-Pentan, n-Hexan, Hexan-Isomerengemisch, Toluol und Xylol.

Falls organische Lösungsmittel (E) eingesetzt werden, handelt es sich um Mengen von vorzugsweise 1 bis 50 Gewichtsteilen, besonders bevorzugt 5 bis 20 Gewichtsteilen, jeweils bezogen auf 100 Gewichtsteile Organosiliciumverbindung (A). Zur Herstellung der erfindungsgemäßen Dispersionen werden bevorzugt keine organischen Lösungsmittel (E) eingesetzt.

Beispiele für Substanzen zur Einstellung des pH-Werts (E) sind Säuren und Basen sowie Puffersysteme, wie beispielsweise Phosphorsäure, Salzsäure, Carbonsäuren, Alkali- oder Erdalkalihydroxidlösungen, Amine sowie die sich daraus ergebenden Puffersysteme.

Als Additive (E) können alle Stoffe eingesetzt werden, die auch bisher in vernetzbaren Siloxanmassen verwendet wurden, wobei diese vorzugsweise unterschiedlich sind zu den Komponenten (A), (B) und (D). Beispiele für Additive (E) sind lösliche Farbstoffe, anorganische und organische Pigmente, Fungizide und Mikrobiozide, Duftstoffe, Rheologiehilfsmittel, Korrosionsinhibitoren, Oxidationsinhibitoren, Lichtschutzmittel, Hitzestabilisatoren, flammabweisend machende Mittel und Mittel zur Beeinflussung der elektrischen Eigenschaften, wobei anorganische und organische Pigmente, Fungizide, Rheologiehilfsmittel, Lichtschutzmittel, Hitzestabilisatoren, flammabweisend machende Mittel und Mittel zur Beeinflussung der elektrischen Eigenschaften bevorzugt und anorganische und organische Pigmente, Rheologiehilfsmittel, Lichtschutzmittel, Hitzestabilisatoren besonders bevorzugt sind. Insbesondere handelt es sich bei den gegebenenfalls eingesetzten Additiven um anorganische und organische Pigmente, Lichtschutzmittel, Hitzestabilisatoren, flammabweisend machende Mittel und Mittel zur Beeinflussung der elektrischen Eigenschaften.

Falls Additive (E) eingesetzt werden, handelt es sich um Mengen von vorzugsweise 0,01 bis 20 Gewichtsteilen, besonders bevorzugt 0,1 bis 10 Gewichtsteilen, jeweils bezogen auf 100 Gewichtsteile Organosiliciumverbindung (A). Zur Herstellung der erfindungsgemäßen Dispersionen werden bevorzugt Additive (E) eingesetzt.

Bei den erfindungsgemäß eingesetzten Komponenten kann es sich jeweils um eine einzelne Art wie auch um ein Gemisch aus mindestens zwei Arten derartiger Komponenten handeln.

Bei den erfindungsgemäßen wässrigen Dispersionen können Feststoffgehalte von bis zu 95 Gewichtsprozent erreicht werden. Niedrigere Feststoffgehalte sind selbstverständlich möglich. Selbst bei erfindungsgemäßen wässrigen Silicondispersionen, die keine weiteren Füllstoffe (E) enthalten, kann ein Feststoffgehalt von über 90 Gew.-% erzielt werden. Als Feststoffgehalt ist hier der Gewichtsanteil aller Bestandteile der Dispersion außer Wasser und, falls verwendet, organischem Lösungsmittel am Gesamtgewicht der Dispersion zu verstehen.

Die erfindungsgemäßen Dispersionen haben einen Feststoffgehalt von bevorzugt 10 bis 80 Gew.-%, besonders bevorzugt 20 bis 70 Gew.-%, insbesondere 30 bis 60 Gew.-%.

Die erfindungsgemäßen wässrigen Dispersionen von Organopolysiloxanen besitzen vorzugsweise pH-Werte von 3 bis 13, bevorzugt 3 bis 11, besonders bevorzugt von 4 bis 10, ganz besonders bevorzugt 5 bis 9.

Die erfindungsgemäßen wässrigen Dispersionen von Organopolysiloxanen können je nach Anwendung standfest oder fließfähig sein.

Bevorzugt handelt es sich bei den erfindungsgemäßen Dispersionen um solche, die hergestellt werden unter Verwendung der Komponenten (A), (B), (C), (D) sowie gegebenenfalls (E), wobei darüberhinausgehende Komponenten vorzugsweise nicht eingesetzt werden.

Grundsätzlich können die erfindungsgemäßen, wässrigen Dispersionen nach beliebigen, bisher bekannten Verfahren hergestellt werden, wie z.B. durch einfaches Vermischen der eingesetzten Komponenten.

Ein weiterer Gegenstand der Erfindung ist ein Verfahren zur Herstellung der erfindungsgemäßen wässrigen, vernetzbaren Dispersionen durch Vermischen der eingesetzten Komponenten.

Gemäß einer bevorzugten Verfahrensvariante werden Bestandteile (A) und gegebenenfalls (E) miteinander vermischt und dann gemeinsam mit den Komponenten (B) und (C) dispergiert sowie anschließend Vernetzer (D) zugegeben.

Eine besonders bevorzugte Verfahrensvariante ist dadurch gekennzeichnet, dass die Bestandteile (A) und gegebenenfalls (E) miteinander vermischt und dann gemeinsam mit den Komponenten (B) und (C) dispergiert werden, wobei die Komponente (B) in einem Teil des Wassers (C) vordispergiert wird, beispielsweise zu einer 20%-igen Kieselsäuredispersion in Wasser, um die Staubfreisetzung bei der Handhabung zu reduzieren, sowie anschließend Vernetzer (D) zugegeben wird.

Das Dispergieren kann in üblichen, zur Herstellung von Emulsionen bzw. Dispersionen geeigneten Mischgeräten, die einen ausreichend hohe Eintrag von Scherenergie leisten, wie beispielsweise schnelllaufende Stator-Rotor-Rührgeräte, wie z.B. nach Prof. P. Willems, bekannt unter der Marke Ultra-Turrax®, oder anderen Stator-Rotor-Systemen, bekannt unter den Marken Kady, Unimix, Koruma, Cavitron, Sonotron, Netzsch, IKA oder Ystral, erfolgen. Andere mögliche Verfahren sind Ultraschallverfahren wie US Finger/Geber oder US Durchflusszellen oder US Systeme wie oder analog wie von Sonorex/Bandelin angeboten oder Kugelmühlen, wie z.B. Dyno-Mill von WAB, CH. Weitere mögliche Verfahren werden mit schnelllaufenden Rührern, wie Flügelrührer oder Balkenrührer, Dissolver wie Scheibendissolver z.B. der Firma Getzmann oder Mischsysteme wie Planetendissolver, Balkendissolver oder andere kombinierte Aggregate aus Dissolver- und Rührersystemen durchgeführt. Andere geeignete Systeme sind Extruder oder Kneter.

Das erfindungsgemäße Verfahren kann diskontinuierlich wie auch kontinuierlich durchgeführt werden.

Selbstverständlich kann die erfindungsgemäße Dispersion auch auf andere Weise hergestellt werden. Es hat sich jedoch gezeigt, dass die Verfahrensweise kritisch ist und z.B. nicht alle Herstellungsarten Dispersionen ergeben, die nach Entfernen von Wasser zu Elastomere führen.

Das erfindungsgemäße Verfahren hat den Vorteil, dass es sehr einfach und ökonomische in der Durchführung ist und wässrige Dispersionen mit variablem Feststoffgehalten hergestellt werden können.

Die erfindungsgemäßen wässrigen Dispersionen können für alle Zwecke eingesetzt werden, für die auch bisher wässrige Dispersionen verwendet werden, wie beispielsweise als Dichtungs- und Klebmassen, Farben, Anstrichsysteme und als elektrisch isolierende bzw. leitende, hydrophobe, klebrige Stoffe abweisende Beschichtungssysteme oder als Grundlage bzw. Zusätze zu solchen Systemen.

Die erfindungsgemäßen wässrigen Dispersionen härten schon bei Raumtemperatur innerhalb kurzer Zeit nach Verdampfen der flüchtigen Anteile, d.h. des Wassers und gegebenenfalls des organischen Lösungsmittels, zu Elastomeren oder Harzen aus.

Ein weiterer Gegenstand der vorliegenden Erfindung sind Formkörper hergestellt durch Vernetzung der erfindungsgemäßen Dispersionen.

Die erfindungsgemäßen wässrigen Dispersionen haben den Vorteil, dass sie auf einfache Art und Weise hergestellt werden können.

Die erfindungsgemäßen wässrigen Dispersionen haben des Weiteren den Vorteil, dass sie eine hohe Lagerstabilität aufweisen.

Die erfindungsgemäßen wässrigen Dispersionen haben ferner den Vorteil, dass auf organische Emulgatoren vollständig verzichtet werden kann, und damit u.a. die Wasserbeständigkeit der Kontaktflächen zwischen den erhaltenen Formkörpern und den Substraten stark verbessert wird.

Die erfindungsgemäßen wässrigen Dispersionen haben den Vorteil, dass sich deren Rheologie im Gegensatz zu bisher bekannten Systemen in Bereichen einstellen lässt, wie sie von den nichtwässrigen Systemen her bekannt sind.

Die erfindungsgemäßen wässrigen Dispersionen haben ferner den Vorteil, dass sich die mechanischen Eigenschaften der ausgehärteten Produkte in Bereichen bewegen, wie sie von den nichtwässrigen Systemen her bekannt sind.

Die erfindungsgemäßen wässrigen Dispersionen haben weiterhin den Vorteil, dass sie so formuliert werden können, dass keinerlei flüchtige organische Verbindungen an die Atmosphäre beim Aushärten abgegeben werden.

Die erfindungsgemäßen wässrigen Dispersionen haben weiterhin den Vorteil, dass sie auf vielen Substraten, wie beispielsweise Papier, Textilien, mineralischen Baustoffen, Kunststoffen, Holz und vielen anderen Unterlagen, festhaftende Überzüge bilden. Das Beschichten kann dabei z.B. durch Streichen, Walzen, Tauchen oder Spritzen erfolgen.

Als bevorzugtes Einsatzgebiet bieten sich die Verwendung als Dichtungsmassen, Klebmassen und Beschichtungsmaterialien an. Beispiele für Beschichtungen sind u.a. Fassadenbeschichtungen und -imprägnierungen, elastische Fassadenfarben, Textil- und Gewebebeschichtungen sowie verschiedene Beschichtungsanwendungen zur Erzielung dauerhafter Hydrophobie.

In den nachstehend beschriebenen Beispielen beziehen sich alle Angaben von Teilen und Prozentsätzen, falls nicht anders angegeben, auf das Gewicht. Des Weiteren beziehen sich alle Viskositätsangaben auf eine Temperatur von 25°C. Sofern nicht anders angegeben, werden die nachstehenden Beispiele bei einem Druck der umgebenden Atmosphäre, also zwischen 900 und 1100 hPa, und bei Raumtemperatur, also bei etwa 22°C bzw. bei einer Temperatur, die sich beim Zusammengeben der Reaktanden bei Raumtemperatur ohne zusätzliche Heizung oder Kühlung einstellt, durchgeführt.

Die Elastomereigenschaften werden jeweils nach den folgenden, genormten Prüfungen ermittelt:

| | |
|---|---|
| Reißfestigkeit | DIN 53504 S2 |
| Reißdehnung | DIN 53504 S2 |
| Modul | DIN 53504 S2 |
| Shore-A-Härte | DIN 53505 |

Herstellung von Feststoffpartikel B1

100 g einer pyrogenen Kieselsäure mit einer spezifischen BET-Oberfläche, gemessen nach DIN 66131 und DIN 66132, von 200 $m^2$/g (erhältlich bei Wacker Chemie AG, D-München unter dem Namen HDK® N20) werden unter Rühren (mit 1000 UpM bei einem Rührflügeldurchmesser von 12,5 cm) fluidisiert, dann während 15 Minuten mit Stickstoffgas beaufschlagt und inertisiert, anschließend der Stickstoffstrom wieder abgestellt. Dann werden 2 g Dimethyldichlorsilan mit einer Zweistoffdüse als Aerosol in die fluidisierte Kieselsäure aufgesprüht, bei einer Temperatur von ca. 25°C und einem Umgebungsdruck von ca. 1013 hPa. Nach 30 Minuten weiterem Rühren wird anschließend die so behandelte Kieselsäure für 2 Stunden bei 300°C in einem Ofen von 100 l Rauminhalt getempert, unter leichtem Stickstoffstrom von 1000 l/h. Erhalten wird eine weiße pulverförmige Kieselsäure mit folgenden Eigenschaften:

- Die Kieselsäure ist bedingt, aber nicht vollständig Wasser-benetzbar; dies zeigt sich dadurch, dass sich von der Kieselsäuren nur 12 Gew.-% in Wasser mit einem Ultraturrax zu einer für einen Tag stabilen fließfähigen Masse einarbeiten lassen, unter den gleichen Bedingungen und zu gleicher Viskosität aber 24 Gew.-% der Ausgangskieselsäure (HDK® N20), die vollständig wasserbenetzbar ist.
- Weitere Eigenschaften der Kieselsäure sind in Tabelle 1 zusammengefasst.

Tabelle 1

| Eigenschaft | Kieselsäure B1 nach Beispiel 1 |
|---|---|
| BET-Oberfläche | 184 $m^2$/g |
| Restgehalt an nicht silylierten Kieselsäure-Silanolgruppen | 80% |
| Kohlenstoffgehalt %C | 0,5 Gew.-% |
| Methanolzahl | 0 |
| Kontaktwinkel THETA Methode-1 gegen Wasser und Luft | 84° |
| Kontaktwinkel THETA Methode-2 gegen Wasser und Luft | 80° |
| Oberflächenenergie GAMMA | 69 mJ/$m^2$ |
| Dispersionsanteil der Oberflächenenergie GAMMA-s-D | 65 mJ/$m^2$ |

- Spezifische BET-Oberfläche, gemessen nach DIN 66131 und DIN 66132
- Restgehalt an nicht silylierten Kieselsäure-Silanolgruppen, erhalten als Quotient (a) der Menge der Kieselsäuresilanolgruppen, der wie o.g. hergestellten Kieselsäure dividiert durch die Menge der Kieselsäuresilanolgruppen der unbehandelten Ausgangskieselsäure (HDK® N20); die Menge der Kieselsäuresilanolgruppen wird durch Säure-Base-Titration bestimmt (analog G.W. Sears Anal. Chem, 28 (12), (1950), 1981). Methode: Säure-Base-Titration der in Wasser/Methanol = 50:50 suspendierte Kieselsäure; Titration im Bereich oberhalb des pH-Bereichs des isoelektrischen Punktes und unterhalb des pH-Bereichs der Auflösung der Kieselsäure; unbehandelte Kieselsäure mit 100% SiOH (Kieselsäure-Oberflächensilanolgruppen): SiOH-phil = 1.8 SiOH / $nm^2$; silylierte Kieselsäure: SiOH-silyl; Restgehalt an nicht silylierten Kieselsäure-Silanolgruppen: %SiOH = SiOH-silyl/SiOH-phil*100%
- Kohlenstoffgehalt %C bestimmt mittels Elementaranalyse auf Kohlenstoff; Verbrennen der Probe bei über 1000°C

im $O_2$-Strom, Detektion und Quantifizierung des entstehenden $CO_2$ mit IR; Gerät LECO 244

- Methanolzahl, gemessen wie folgt: Test (Volumen% MeOH in Wasser) der Benetzbarkeit mit Wasser-Methanol Gemischen = Methanolzahl (MZ): Einschütteln eines gleichen Volumens der Kieselsäure mit gleichem Volumen an Wasser-Methanol Gemisch; Start mit 0% Methanol; bei Nicht-Benetzung schwimmt Kieselsäure auf: Es ist ein Gemisch mit um 5Vol% höherem MeOH Gehalt zu verwenden; bei Benetzung sinkt Kieselsäure ein: Anteil MeOH (%) in Wasser gibt Methanolzahl (MZ)

- Kontaktwinkel THETA Methode-1 gegen Wasser, gemessen wie folgt: Der Kontaktwinkel der Partikel wird durch sorgfältiges Herstellen, mit üblichen Methoden, eines Presslings der Kieselsäure und anschließender Bestimmung des Kontaktwinkels gegen Wasser, hier ein aufliegender Wassertropfen aus bidestilliertem Wasser an Luft durch digitale Bildauswertung erhalten.

Der Kontaktwinkel θ definiert das Verhältnis der Oberflächenspannungen und -energien γ von Flüssigkeiten (l) und Feststoffen (s) in einem Gasraum (g) wie folgt.

$$\cos (\theta) = ( \gamma (sl) - \gamma (sg) ) / \gamma (lg)$$

Die Oberflächenenergie ($mJ/m^2$) eines Feststoffes ist dimensionsgleich mit der Oberflächenspannung einer Flüssigkeit (mN/m), da gilt [J] = [N*m].

- Kontaktwinkel THETA Methode-2 gegen Wasser, gemessen wie mittels Imbibitionsmethode unter Verwendung der Lukas-Washburn-Gleichung, beruhend auf dem Einsaugen von bekannten und definierten Flüssigkeit, mit bekannter Oberflächenspannung, in ein definiertes Haufwerk, wie hier ein schwach verdichteter Pressling aus der Kieselsäure mit offener Porosität größer 0,25 und Porenradius r. Die Aufsauggeschwindigkeit dh/dt, bzw. die Höhe der aufgesaugten Flüssigkeitsäule h, berechnet aus der Massenaufnahme m an Flüssigkeit durch das Partikelhaufwerk gegen die Zeit t, sowie die Viskosität der aufgesaugten Flüssigkeit η sowie die Oberflächenspannung γ der aufgesaugten Flüssigkeit lassen bei bekanntem Partikelradius r mittels der Gleichung nach Lucas-Washburn (Washburn, E.W., Phys. Rev. 17, 273 (1921) und R. Lucas Kolloid Z. 23, 15 (1918) den Wert Cosinus von θ (cos (θ)) und damit den Kontakt- oder Randwinkel θ der Flüssigkeit gegen die Partikeloberfläche ermitteln; folgend J. Schoelkopf et al, J. Colloid. Interf. Sci. 227, 119-131 (2000) Als Flüssigkeit mit bekannter Oberflächenspannung werden Methanol-Wasser-Mischungen der Mischungsverhältnisse (Volumen Methanol zu Volumen Wasser) 0:100, 5:95, 10:90, 15:85, 20:80, 25:75, 30:70, 35:65, 40:60, 45:55, 50:50, 55:45, 60:40, 65:35, 70:30, 75:25, 80:20, 85:15, 90:10, 95:5, 100:0 verwendet.

$$dh/dt = r * \gamma * \cos (\theta) / ( 4 * \eta )$$

und

$$h^2 = r * \gamma * t * \cos (\theta) / ( 2 * \eta )$$

$t = A \cdot m^2$    Washbum-Gleichung

mit t :   Zeit

m :   Masse der angesaugten Flüssigkeit

A =

$$A = \frac{\eta}{\{ C \cdot \rho^2 \cdot \gamma \cdot \cos \vartheta \}}$$

η :   Viskosität der Flüssigkeit

ρ :   Dichte der Flüssigkeit

γ :   Oberflächenspannung der Flüssigkeit

ϑ :   Randwinkel Flüssigkeit-Pulver

C :   Faktor, nur abhängig von den geometrischen Eigenschaften des Pulvers und Probenrohrs

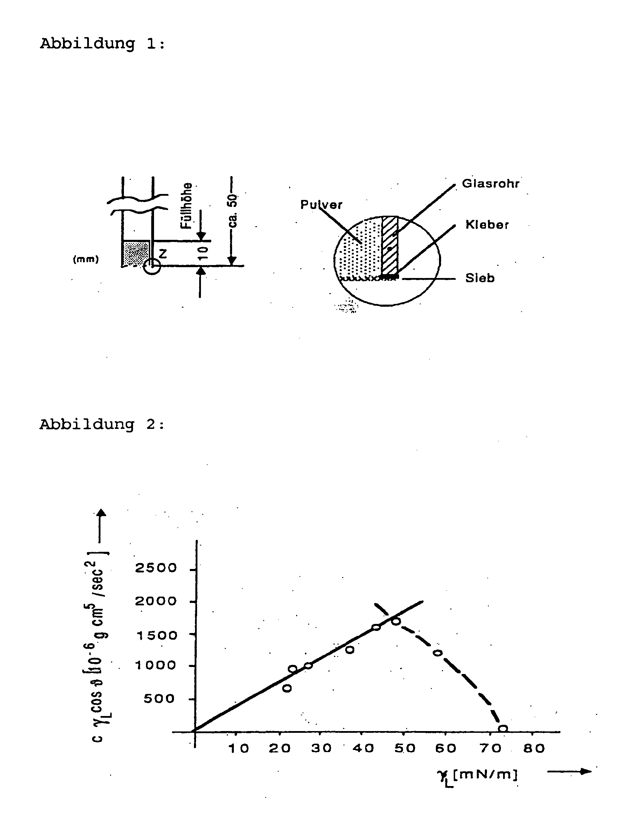

Eine Illustration des Messverfahrens ist in Abbildung 1 zu finden.

Abbildung 1

- Die Oberflächenenergie GAMMA kann für Partikel als kritische Oberflächenenergie GAMMA-krit mittels eines Zisman-Plots bestimmt werden, der wie in Abbildung 2 gegeben den jeweiligen Kontaktwinkel THETA der Kieselsäure gegen eine definierte Flüssigkeit, wie oben mit der Imbibitionsmethode bestimmt, gegen die Kontaktwinkel der jeweiligen Flüssigkeiten aufträgt

- Abbildung 2

- Für Partikel wie pyrogene Kieselsäure die Agglomerate mit Schüttdichten $d_{SD}$ << 1 g/ml bildend, aber bestehend aus Primärpartikeln mit Materialdichten $d_{MD}$ > 1 g/ml, kann Einschütteln in Flüssigkeiten verschiedener Oberflächenspannung als Methode herangezogen werden: Bei Nichtbenetzung schwimmen die Partikel-Agglomerate auf; bei Benetzung wird die Luft in den Agglomeraten verdrängt, und die Partikel-Agglomerate sinken ein.
Bei Verwendung verschiedener Flüssigkeiten mit verschiedener Oberflächenspannung kann exakt die Oberflächenspannung einer Flüssigkeit ermittelt werden, bei der die Partikel-Agglomerate einsinken; diese liefert die kritische Oberflächenenergie $\gamma_{crit}$ als Maß für die Oberflächenenergie $\gamma$ der Partikel.
Die Methode kann auch dergestalt vereinfacht werden, dass die Oberflächenspannung von Wasser (72,5 mN/m) durch Zugabe von Methanol, Ethanol oder iso-Propanol verringert wird.
Typischerweise kann Wasser vorgelegt werden, eine bestimmte Menge an Partikel-Agglomeraten auf die Wasseroberfläche aufgelegt (schwimmend) und dann der Alkohol zutitriert, unter Rühren. Das Wasser zu Alkohol-Verhältnis bei Einsinken der Partikel-Agglomerate wird notiert und genau für dieses Verhältnis Wasser: Alkohol in einem getrennten Versuch mit Standardmethoden (Ringabreißmethode, Wilhelmy-Methode) die Oberflächenspannung bestimmt.
Effektiver, und wie hier durchgeführt, werden definierte Mischungen von Wasser mit Methanol hergestellt, und dann die Oberflächenspannungen dieser Gemische bestimmt werden. In einem getrennten Experiment werden diese Wasser: Methanol Mischungen mit definierten Mengen an Partikel-Agglomeraten überschichtet (beispielsweise in einem Volumenverhältnis 1:1) und unter definierten Bedingungen geschüttelt (beispielweise schwaches Schütteln mit der Hand oder mit einem Taumelmischer für ca. 1 Minute). Bestimmt wird das Wasser:Methanol-Gemisch, bei dem die Partikel-Agglomerate eben noch nicht einsinken und das Wasser:Methanol-Gemisch mit höherem Methanolgehalt, bei dem die Partikel-Agglomerate eben einsinken. Die Oberflächenspannung des letzteren Methanol: Wasser-Gemisches liefert die kritische Oberflächenenergie $\gamma_{crit}$ als Maß für die Oberflächenenergie $\gamma$ der Partikel, wie in Tabelle 1 gegeben.

- Der Dispersions-Anteil der Oberflächenenergie gamma-s-D wird mit der Inversen Gaschromatographie und Alkanen als Sonden bestimmt, folgend "Inverse Gaschromatographie" - "Characterisation of Polymers and other Materials", 391 ACS Symposium Series, D R Lloyd, Th C Ward, H P Schreiber, Chapter 18, pp 248-261, ACS, Washington DC 1989, ISBN 0-8412-1610-X.

Herstellung einer wässrigen Partikeldispersion B2

In einem 1000 ml Edelstahlbecher werden 500 g vollentsalztes (VE) Wasser und 200 g Feststoffpartikel B1, deren Herstellung oben beschrieben ist, mittels eines schnelllaufenden Stator-Rotor-Rührgeräte nach Prof. P. Willems, bekannt unter der Marke Ultra-Turrax®, dispergiert. Die Feststoffpartikel B1 werden in 5 gleichen Portionen zugegeben. Nach Homogenisierung der ersten Zugabe von B1 wird der pH-Wert mittels (1 N)KOH-Lösung auf einen Wert von 9 eingestellt. Die weiteren Portionen werden innerhalb von 2 Stunden zugefügt. Es resultiert eine standfeste, weiße Dispersion mit 28% Feststoffgehalt zur weiteren Verwendung in den erfindungsgemäßen Beispielen.

Beispiel 1

Zu 70 g der oben hergestellten Partikeldispersion B2 wird unter ständigem Mischen mittels eines Planetendissolvers (PC Labotop) eine Mischung von 200 g eines OH-terminierten Polydimethylsiloxans mit einer Viskosität von 6000 mPas (käuflich erhältlich unter dem Namen "Polymer 6000" bei Wacker Chemie AG, D-München)und 6 g einer hydrophobierten Kieselsäure (käuflich erhältlich unter der Bezeichnung HDK® H2000 bei Wacker Chemie AG, D-München) zugegeben. Nachdem eine homogene Konsistenz vorliegt, wird mit 85%-iger Phosphorsäure ein pH-Wert von 1,5 eingestellt. Schrittweise erfolgt die Zugabe von deionisiertem Wasser, bis ein Wassergehalt von 35 Gew.-% erreicht ist. Nach 30 Minuten wird mittels wässriger KOH-Lösung ein pH-Wert von 6 eingestellt. Danach wird durch die Zugabe von 1,6 g N,N-Dibutylaminomethyl-triethoxysilan die Zubereitung vernetzungsfähig gemacht.

Beispiel 2

Zu 70 g der oben hergestellten Partikeldispersion B2 wird unter ständigem Mischen mittels eines Planetendissolvers (PC Labotop) 180 g einer Mischung von OH-terminiertem Polydimethylsiloxan mit einer Viskosität von 6000 mPas (käuflich erhältlich unter dem Namen "Polymer 6000" bei Wacker Chemie AG, D-München), 6 g einer hydrophobierten Kieselsäure (käuflich erhältlich unter der Bezeichnung HDK® H2000 bei Wacker Chemie AG, D-München) und 20 g eines MQ-Harzes der durchschnittlichen Formel $[(CH_3)_3SiO_{1/2}]_{1,1}[SiO_2]$ mit einem durchschnittlichen Molekulargewicht von 2000 und einem durchschnittlichen Restethoxygehalt von 2,1 Gewichtsprozent, bezogen auf das Harzmolekül, zugegeben.

Nachdem eine homogene Konsistenz vorliegt, wird mit etwa 2 g einer 85%-iger Phosphorsäure ein pH-Wert von 1,5 eingestellt. Schrittweise erfolgt die Zugabe von deionisiertem Wasser, bis ein Wassergehalt von 35 Gew.-% erreicht ist. Nach 30 Minuten Dispergieren wird mittels wässriger KOH-Lösung ein pH-Wert von 6 eingestellt. Danach wird durch die Zugabe von 1,6 g N,N-Dibutylaminomethyl-triethoxysilan die Zubereitung vernetzungsfähig gemacht.

Beispiel 3

Zu 70 g der oben hergestellten Partikeldispersion B2 wird unter ständigem Mischen mittels eines Planetendissolvers (PC Labotop) 180 g einer Mischung von OH-terminiertem Polydimethylsiloxan mit einer Viskosität von 6000 mPas (käuflich erhältlich unter dem Namen "Polymer 6000" bei Wacker Chemie AG, D-München), 6 g einer hydrophobierten Kieselsäure (käuflich erhältlich unter der Bezeichnung HDK H2000 bei Wacker Chemie AG, D-München) und 20 g Aluminiumtrihydrat (Martinal OL 104 S, Fa. Martinswerke) zugegeben.

Nachdem eine homogene Konsistenz vorliegt, wird mit etwa 2 g einer 85%-iger Phosphorsäure ein pH-Wert von 1,5 eingestellt. Schrittweise erfolgt die Zugabe von deionisiertem Wasser, bis ein Wassergehalt von 35 Gew.% erreicht ist. Nach 30 Minuten Dispergieren wird mittels wässriger KOH-Lösung ein pH-Wert von 6 eingestellt. Danach wird durch die Zugabe von 1,6 g N,N-Dibutylaminomethyl-triethoxysilan die Zubereitung vernetzungsfähig gemacht.

**Beispiel 4**

Aus den in den Beispielen 1 bis 3 erhaltenen Dispersionen werden jeweils 2 mm dicke Filme erzeugt, indem die wässrige Dispersion auf eine Oberfläche aus Polytetrafluorethylen aufgetragen und das Wasser bei Raumtemperatur verdampfen gelassen wird. Die sich bildenden trockenen, elastischen Filme, wurden nach 7 Tagen auf ihre Elastomereigenschaften hin untersucht. Die Ergebnisse finden sich in Tabelle 2.

**Tabelle 2**

| Dispersion aus | Beispiel 1 | Beispiel 2 | Beispiel 3 |
|---|---|---|---|
| Härte Shore A | 25 | 18 | 40 |
| Reißfestigkeit [N/mm$^2$] | 1,0 | 1,0 | 1,3 |
| Reißdehnung [%] | 400 | 600 | 390 |
| Konsistenz | standfest | standfest | standfest |
| Viskosität*)    - Segment 1<br>- Segment 2<br>- Segment 3 | 2,8 Pa·s<br>8700 mPa·s<br>2,5 Pa·s | 9,1 Pa·s<br>280000 mPas<br>12,1 Pa·s | 8,2 Pa·s<br>55000 mPa·s<br>9, 5 Pa·s |
| *)Die Viskosität wird mittels Platte-Kegel-Messungen bestimmt. Die Messungen erfolgten mit einem Physika MCR 300 mit einem Messkegel PP25 und der dazugehörigen Software Rheoplus /32. Die Messung erfolgt in folgenden drei Segmenten:<br>1) oszillierend (0,01% Def, 1Hz, 60s)<br>2) Rotation (10 l/s, 20s)<br>3) oszillierend (0,01% Def, 1Hz, 60s) | | | |

## EP 2 649 123 B1

Angegeben sind jeweils die letzten Werte pro Segment.

**Patentansprüche**

1. Wässrige, vernetzbare Dispersionen herstellbar unter Verwendung von

    (A) Organosiliciumverbindungen enthaltend Einheiten der Formel

$$R_a(OR^1)_bSiO_{(4-a-b)/2} \qquad (I),$$

    wobei
    R gleiche oder verschiedene SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet,
    $R^1$ gleich oder verschieden sein kann und Wasserstoffatom oder gegebenenfalls substituierter Kohlenwasserstoffrest, der mit Sauerstoffatomen unterbrochen sein kann, bedeutet,
    a 0, 1, 2 oder 3 ist und
    b 0, 1, 2 oder 3 ist,
    mit der Maßgabe, dass die Summe aus a+b kleiner oder gleich 4 ist,
    (B) Siliciumdioxidpartikel, die zum Teil mit Wasser benetzbar sind,
    (C) Wasser
    (D) Organosiliciumverbindung enthaltend mindestens eine Einheit der Formel

$$[A-CR^3_2]_eSiR^2_cY_dO_{(4-c-d-e)/2} \qquad (II),$$

    wobei
    A gleich oder verschieden sein kann und einen über Stickstoff gebundenen organischen Rest bedeutet,
    $R^2$ gleiche oder verschiedene, einwertige, gegebenenfalls substituierte Kohlenwasserstoffreste bedeutet,
    $R^3$ gleich oder verschieden sein kann und Wasserstoffatom oder einwertige, gegebenenfalls substituierte Kohlenwasserstoffreste darstellt,
    Y gleich oder verschieden sein kann und einen hydrolysierbaren Rest bedeutet,
    c gleich 0, 1, 2 oder 3 ist,
    d gleich 0, 1, 2 oder 3 und
    e gleich 0, 1 oder 2 ist, mit der Maßgabe, dass die Summe aus c+d+e ≤ 4 ist und die Organosiliciumverbindung mindestens eine Einheit mit e verschieden 0 sowie mindestens zwei Reste Y aufweist,
    sowie gegebenenfalls
    (E) weiteren Stoffen.

2. Wässrige Dispersionen gemäß Anspruch 1, **dadurch gekennzeichnet, dass** sie im Wesentlichen frei sind von herkömmlichen, bei Raumtemperatur und dem Druck der umgebenden Atmosphäre nicht-partikulären flüssigen und festen, rein organischen oberflächenaktiven Substanzen.

3. Wässrige Dispersionen gemäß Anspruch 1 oder 2, **dadurch gekennzeichnet, dass** die eingesetzten Partikel (B) einen mittleren Durchmesser von 1 bis 5000 nm aufweisen.

4. Wässrige Dispersionen gemäß einem oder mehreren der Ansprüche 1 bis 3, **dadurch gekennzeichnet, dass** sie Komponente (B) in Mengen von 0,1 bis 50 Gewichtsteilen, bezogen auf 100 Gewichtsteile Dispersion, enthalten.

5. Wässrige Dispersionen gemäß einem oder mehreren der Ansprüche 1 bis 4, **dadurch gekennzeichnet, dass** es sich bei den Organosiliciumverbindungen (D) um Silane der Formel (II) und/oder deren Teilhydrolysate handelt.

6. Wässrige Dispersionen gemäß einem oder mehreren der Ansprüche 1 bis 5, **dadurch gekennzeichnet, dass** Komponente (D) in Mengen von 0,01 bis 10 Gewichtsteilen, bezogen auf 100 Gewichtsteile Dispersion, eingesetzt wird.

7. Wässrige Dispersionen gemäß einem oder mehreren der Ansprüche 1 bis 6, **dadurch gekennzeichnet, dass** es bei Komponente (E) um Füllstoffe, die unterschiedlich sind zu (B), Vernetzungskatalysatoren, Haftvermittler, Weichmacher, organische, in Bezug auf die Dispersionen inerte Lösungsmittel, Substanzen zur Einstellung des pH-Werts und Additive handelt.

8. Wässrige Dispersionen gemäß einem oder mehreren der Ansprüche 1 bis 7, **dadurch gekennzeichnet, dass** sie einen Feststoffgehalt von 10 bis 80 Gew.-% aufweisen.

9. Verfahren zur Herstellung der wässrigen, vernetzbaren Dispersionen gemäß einem oder mehreren der Ansprüche 1 bis 8 durch Vermischen der eingesetzten Komponenten.

10. Formkörper hergestellt durch Vernetzung der Dispersionen gemäß einem oder mehreren der Ansprüche 1 bis 8 bzw. hergestellt gemäß Anspruch 9.

**Claims**

1. Aqueous crosslinkable dispersions preparable using

    (A) organosilicon compounds comprising units of the formula

    $$R_a(OR^1)_bSiO_{(4-a-b)/2} \qquad (I),$$

    where
    R denotes identical or different SiC-bonded hydrocarbon radicals having 1 to 18 carbon atoms, which are optionally substituted by halogen atoms, amino groups, ether groups, ester groups, epoxy groups, mercapto groups, cyano groups or (poly)glycol radicals, the latter being composed of oxyethylene and/or oxypropylene units,
    $R^1$ may be identical or different and denotes hydrogen atom or optionally substituted hydrocarbon radical which may be interrupted by oxygen atoms,
    a is 0, 1, 2, or 3, and
    b is 0, 1, 2, or 3,
    with the proviso that the sum of a+b is less than or equal to 4,
    (B) silicon dioxide particles which are partly wettable with water,
    (C) water,
    (D) organosilicon compound comprising at least one unit of the formula

    $$[A-CR^3_2]_eSiR^2_cY_dO_{(4-c-d-e)/2} \qquad (II),$$

    where
    A may be identical or different and denotes an organic radical bonded via nitrogen,
    $R^2$ denotes identical or different, monovalent, optionally substituted hydrocarbon radicals,
    $R^3$ may be identical or different and represents hydrogen atom or monovalent, optionally substituted hydrocarbon radicals,
    Y may be identical or different and denotes a hydrolyzable radical,
    c is 0, 1, 2, or 3,
    d is 0, 1, 2, or 3, and
    e is 0, 1, or 2, with the proviso that the sum of c+d+e is $\leq$ 4 and the organosilicon compound has at least one unit where e is other than 0, and also at least two radicals Y,
    and also, optionally,
    (E) further substances.

2. Aqueous dispersions according to Claim 1, **characterized in that** they are substantially free from conventional liquid and solid, purely organic, surface-active substances that are nonparticulate at room temperature under the pressure of the surrounding atmosphere.

3. Aqueous dispersions according to Claim 1 or 2, **characterized in that** the particles (B) used have an average diameter of 1 to 5000 nm.

4. Aqueous dispersions according to one or more of Claims 1 to 3, **characterized in that** they comprise component (B) in amounts of 0.1 to 50 parts by weight, based on 100 parts by weight of dispersion.

5. Aqueous dispersions according to one or more of Claims 1 to 4, **characterized in that** the organosilicon compounds (D) are silanes of the formula (II) and/or partial hydrolyzates thereof.

6. Aqueous dispersions according to one or more of Claims 1 to 5, **characterized in that** component (D) is used in amounts of 0.01 to 10 parts by weight, based on 100 parts by weight of dispersion.

7. Aqueous dispersions according to one or more of Claims 1 to 6, **characterized in that** component (E) comprises fillers other than (B), crosslinking catalysts, adhesion promoters, plasticizers, organic solvents inert relative to the dispersions, pH modifiers, and additives.

8. Aqueous dispersions according to one or more of Claims 1 to 7, **characterized in that** they have a solids content of 10 to 80 wt%.

9. Process for preparing the aqueous, crosslinkable dispersions according to one or more of Claims 1 to 8 by mixing the components used.

10. Shaped articles produced by crosslinking the dispersions according to one or more of Claims 1 to 8 and/or produced according to Claim 9.

## Revendications

1. Dispersions aqueuses, réticulables, pouvant être préparées en utilisant

   (A) des composés organosiliciés contenant des unités de formule

$$R_a(OR^1)_b SiO_{(4-a-b)/2} \qquad (I),$$

   où
   R signifie des radicaux hydrocarbonés liés par SiC identiques ou différents, comprenant 1 à 18 atomes de carbone, qui sont le cas échéant substitués par des atomes d'halogène, des groupes amino, des groupes éther, des groupes ester, des groupes époxy, des groupes mercapto, des groupes cyano ou des radicaux (poly)glycol, ces derniers étant formés d'unités oxyéthylène et/ou oxypropylène,
   $R^1$ peut être identique ou différent et signifie un atome d'hydrogène ou un radical hydrocarboné le cas échéant substitué, qui peut être interrompu par des atomes d'oxygène,
   a vaut 0, 1, 2 ou 3 et
   b vaut 0, 1, 2 ou 3,
   à condition que la somme de a + b soit inférieure ou égale à 4,
   (B) des particules de dioxyde de silicium, qui sont en partie mouillables à l'eau,
   (C) de l'eau
   (D) un composé organosilicié contenant au moins une unité de formule

$$[A-CR^3{}_2]_e SiR^2{}_c Y_d O_{(4-c-d-e)/2} \qquad (II),$$

   où
   A peut être identique ou différent et signifie un radical organique lié par azote,
   $R^2$ signifie des radicaux hydrocarbonés identiques ou différents, monovalents, le cas échéant substitués,
   $R^3$ peut être identique ou différent et représente un atome d'hydrogène ou des radicaux hydrocarbonés monovalents, le cas échéant substitués,
   Y peut être identique ou différent et signifie un radical hydrolysable,
   c vaut 0, 1, 2 ou 3,
   d vaut 0, 1, 2 ou 3 et
   e vaut 0, 1 ou 2,
   à condition que la somme de c + d + e ≤ 4 et que le composé organosilicié présente au moins une unité dans laquelle e est différent de 0 ainsi qu'au moins deux radicaux Y,

ainsi que le cas échéant
(E) d'autres substances.

**2.** Dispersions aqueuses selon la revendication 1, **caractérisées en ce qu'**elles sont sensiblement exemptes de substances tensioactives purement organiques, usuelles, non particulaires, liquides et solides à température ambiante et à la pression de l'atmosphère ambiante.

**3.** Dispersions aqueuses selon la revendication 1 ou 2, **caractérisées en ce que** les particules (B) utilisées présentent un diamètre moyen de 1 à 5000 nm.

**4.** Dispersions aqueuses selon l'une ou plusieurs des revendications 1 à 3, **caractérisées en ce qu'**elles contiennent le composant (B) en des quantités de 0,1 à 50 parties en poids, par rapport à 100 parties en poids de dispersion.

**5.** Dispersions aqueuses selon l'une ou plusieurs des revendications 1 à 4, **caractérisées en ce qu'**il s'agit, pour les composés organosiliciés (D), de silanes de formule (II) et/ou de leurs hydrolysats partiels.

**6.** Dispersions aqueuses selon l'une ou plusieurs des revendications 1 à 5, **caractérisées en ce que** le composant (D) est utilisé en des quantités de 0,01 à 10 parties en poids, par rapport à 100 parties en poids de dispersion.

**7.** Dispersions aqueuses selon l'une ou plusieurs des revendications 1 à 6, **caractérisées en ce qu'**il s'agit, pour le composant (E), de charges qui sont différentes par rapport à (B), de catalyseurs de réticulation, de promoteurs d'adhérence, de plastifiants, de solvants organiques, inertes par rapport aux dispersions, de substances pour le réglage du pH et d'additifs.

**8.** Dispersions aqueuses selon l'une ou plusieurs des revendications 1 à 7, **caractérisées en ce qu'**elles présentent une teneur en solides de 10 à 80% en poids.

**9.** Procédé pour la préparation des dispersions aqueuses, réticulables selon l'une ou plusieurs des revendications 1 à 8 par mélange des composants utilisés.

**10.** Corps façonnés, préparés par réticulation des dispersions selon l'une ou plusieurs des revendications 1 à 8 ou préparées selon la revendication 9.

Abbildung 1:

Abbildung 2:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 365439 A
- EP 665882 A
- US 4221688 A
- US 4427811 A
- US 5162429 A
- EP 1433749 B


**In der Beschreibung aufgeführte Nicht-Patentliteratur**

- **G. LAGALY ; O. SCHULZ ; R. ZINDEL.** *Steinkopff, Darmstadt,* 1997, ISBN 3-7985-1087-3, 1-4
- Inverse Gaschromatographie. **D R LLOYD ; TH C WARD ; H P SCHREIBER.** Characterisation of Polymers and other Materials. ACS Symposium Series, 1989, vol. 391, 248-261
- **G.W. SEARS.** *Anal. Chem,* 1950, vol. 28 (12), 1981
- **WASHBURN, E.W.** *Phys. Rev.,* 1921, vol. 17, 273
- **R. LUCAS.** *Kolloid Z.,* 1918, vol. 23, 15
- **J. SCHOELKOPF et al.** *J. Colloid. Interf. Sci.,* 2000, vol. 227, 119-131